(19) Europäisches Patentamt
European Patent Office
Office européen des brevets

(11) **EP 3 115 247 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **16177890.7**

(22) Anmeldetag: **05.07.2016**

(51) Internationale Patentklassifikation (IPC):
**B60K 23/08** (2006.01)    **B60K 28/16** (2006.01)

(52) Gemeinsame Patentklassifikation (CPC):
**B60K 23/08; B60K 28/16;** B60K 2023/0825;
B60K 2023/0858; B60Y 2200/22; B60Y 2200/221;
B60Y 2300/18175

(54) **EINRICHTUNG ZUM BETREIBEN EINES ALLRADGETRIEBENEN LANDWIRTSCHAFTLICHEN NUTZFAHRZEUGS**

DEVICE FOR OPERATING A FOUR WHEEL DRIVE AGRICULTURAL VEHICLE

DISPOSITIF DE FONCTIONNEMENT D'UN VEHICULE AGRICOLE A QUATRE ROUES MOTRICES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2015 DE 102015212897**

(43) Veröffentlichungstag der Anmeldung:
**11.01.2017 Patentblatt 2017/02**

(73) Patentinhaber: **Deere & Company**
**Moline, IL 61265 (US)**

(72) Erfinder:
• **Woopen, Thomas**
  **51570 Windeck (DE)**
• **Reinmuth, Florian**
  **74889 Sinsheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 2 730 447    US-A- 4 718 515**
**US-A- 5 802 489**

## Beschreibung

Die Erfindung betrifft eine Einrichtung zum Betreiben eines allradgetriebenen landwirtschaftlichen Nutzfahrzeugs, mit einer angetriebenen Hinterachse sowie einer zur Durchführung eines Allradbetriebs zuschaltbaren Vorderachse, wobei eine Kontrolleinheit während des Allradbetriebs eine Vorderradschlupfgröße $\mu$ ermittelt, die einen an der Vorderachse des landwirtschaftlichen Nutzfahrzeugs auftretenden Antriebsradschlupf charakterisiert.

Eine Einrichtung zum Betreiben eines allradgetriebenen Arbeitsfahrzeugs in Gestalt eines Traktors geht beispielsweise aus der EP 2 730 447 A1 hervor. Die als Antriebssteuersystem für ein Arbeitsfahrzeug ausgebildete Einrichtung umfasst eine Leistungsübertragungseinheit zum Antreiben von Vorder- und Hinterrädern des Arbeitsfahrzeugs mittels eines Antriebsmotors sowie eine Umschaltvorrichtung, die es ermöglicht, zwischen einem Allradbetrieb, in dem sowohl die Vorderals auch die Hinterräder des Arbeitsfahrzeugs angetrieben werden, und einem Zweiradbetrieb, in dem lediglich dessen Hinterräder angetrieben werden, umzuschalten. Die Umschaltung wird hierbei fahrerunabhängig nach Maßgabe eines für die Hinterräder erfassten Radschlupfs vorgenommen. Die Erfassung des Radschlupfs erfolgt auf Grundlage einer aus Positionsinformationen eines GPS-Moduls abgeleiteten aktuellen Fortbewegungsgeschwindigkeit des Arbeitsfahrzeugs, indem diese mit einer theoretisch zu erwartenden Fortbewegungsgeschwindigkeit des Arbeitsfahrzeugs verglichen wird, die sich aus der Drehzahl des Antriebsmotors, dem Übersetzungsverhältnis eines Fahrzeuggetriebes sowie dem Reifenumfang der Hinterräder ergibt. Ist der solchermaßen bestimmte Radschlupf größer als ein vorgegebener Schwellenwert, so aktiviert das Antriebssteuersystem den Allradbetrieb durch Schließen einer elektrohydraulisch betätigbaren Kupplung. Andererseits deaktiviert das Antriebssteuersystem den Allradbetrieb durch Öffnen der elektrohydraulisch betätigbaren Kupplung und kehrt in den Zweiradbetrieb zurück, sobald der erfasste Radschlupf kleiner oder gleich dem vorgegebenen Schwellenwert ist und sich das Arbeitsfahrzeug zugleich auf einem im Wesentlichen ungeneigten Untergrund befindet. Daneben ist eine Deaktivierung des Allradbetriebs für den Fall erhöhter Fortbewegungsgeschwindigkeiten des Arbeitsfahrzeugs oberhalb von 20 km/h vorgesehen. Der Umfang, in dem die Vorderräder während des Allradbetriebs tatsächlich in die Fahraufgabe eingebunden sind, bleibt hingegen außer Acht. Der Allradbetrieb wird daher auch in Situationen aufrecht erhalten, in denen beispielsweise aufgrund verringerter Radaufstandskräfte an den Vorderrädern ein hinreichender Bodenkontakt zugehöriger Vorderreifen nicht mehr gegeben ist.

Eine vergleichbare Einrichtung ist auch aus der US 5 802 489 A in Zusammenhang mit einem System zur Zuschaltung eines Frontradantriebs für ein landwirtschaftliches Fahrzeug bekannt, wobei ein von dem landwirtschaftlichen Fahrzeug umfasster Frontantrieb ausgekuppelt wird, wenn der Radschlupf an den Hinterrädern kleiner ist als eine zugehörige Schlupfschwelle. Darüber hinaus schlägt die US 4 718 515 A vor, eine Deaktivierung des Hinterantriebs bei einem bremsbedingten Blockieren der Räder eines allradbetriebenen Fahrzeugs vorzunehmen.

In der DE 196 47 507 A1 ist ferner eine Antriebssteuerung insbesondere für landwirtschaftliche Nutzfahrzeuge gezeigt, die durch gezieltes Zu- oder Abschalten einer antreibbaren Vorderachse zusätzlich zu einer ständig angetriebenen Hinterachse die Verlustleistung innerhalb eines Antriebsstrangs des Nutzfahrzeugs bei auftretendem Schlupf verringert. Zur Beurteilung, ob die Vorderachse hinzuzuschalten ist, findet eine Bewertung der Fahrwerkswirkungsgrade von Allrad- und Hinterradantrieb statt.

Es ist Aufgabe der vorliegenden Erfindung, eine hinsichtlich der zur fahrerunabhängigen Deaktivierung eines Allradbetriebs herangezogenen Kriterien weiter verbesserte Einrichtung der eingangs genannten Art anzugeben.

Diese Aufgabe wird durch eine Einrichtung zum Betreiben eines allradgetriebenen landwirtschaftlichen Nutzfahrzeugs mit den Merkmalen des Patentanspruchs 1 gelöst.

Die Einrichtung zum Betreiben eines allradgetriebenen landwirtschaftlichen Nutzfahrzeugs umfasst eine angetriebene Hinterachse sowie eine zur Durchführung eines Allradbetriebs zuschaltbare Vorderachse. Eine Kontrolleinheit ermittelt während des Allradbetriebs eine Vorderradschlupfgröße $\mu$, die einen an der Vorderachse des landwirtschaftlichen Nutzfahrzeugs auftretenden Antriebsradschlupf charakterisiert, wobei die Kontrolleinheit den Allradbetrieb fahrerunabhängig durch Öffnen einer die Antriebsverbindung zur Vorderachse unterbrechenden Allradkupplung deaktiviert, wenn diese erkennt, dass die ermittelte Vorderradschlupfgröße $\mu$ größer ist als ein vorgegebener Schwellenwert $\mu_{lim}$, der auf einen während des Allradbetriebs an der Vorderachse auftretenden erhöhten Antriebsradschlupf hinweist.

Durch geeignete Vorgabe des Schwellenwerts $\mu_{lim}$ lässt sich vermeiden, dass der Antrieb der Vorderachse in Situationen aufrechterhalten bleibt, in denen beispielsweise aufgrund verringerter Aufstandskräfte im Bereich der Vorderachse ein hinreichender Bodenkontakt zugehöriger Vorderreifen nicht mehr gegeben ist. Ein Aufwühlen des Untergrunds beim Befahren von Feldern oder Grünflächen wie auch ein übermäßiger Verschleiß der Vorderreifen im Falle der Durchführung von Straßentransportfahrten kann auf diese Weise verlässlich vermieden werden.

Dies ist insbesondere bei einer Entlastung der Vorderachse infolge eines hecklastigen Fahrverhaltens des landwirtschaftlichen Nutzfahrzeugs von Bedeutung. Bei einem als Traktor ausgebildeten landwirtschaftlichen Nutzfahrzeug treten derartige Verhältnisse typischerweise beim Pflügen oder beim Transport von im Heckbereich angebrachten Zusatz- bzw. Anbaugeräten auf.

Die Einrichtung ist insbesondere Bestandteil eines Motor- bzw. Getriebemanagementsystems des landwirtschaftlichen Nutzfahrzeugs. Ein als Dieselmotor ausgebildeter Verbrennungsmotor steht dabei über eine Kurbelwelle mit einem Fahrzeuggetriebe in Verbindung. Das Fahrzeuggetriebe umfasst einen mit der Hinterachse sowie zugehörigen Hinterrädern verbundenen Hinterachsgetriebeabgang sowie einen über eine Allradkupplung zuschaltbaren und auf diese Weise mit der Vorderachse sowie zugehörigen Vorderrädern verbindbaren Vorderachsgetriebeabgang.

Vorteilhafte Ausführungen der erfindungsgemäßen Einrichtung gehen aus den Unteransprüchen hervor.

Im einfachsten Fall berechnet die Kontrolleinheit die Vorderradschlupfgröße $\mu$ aus dem Verhältnis zwischen der momentanen Fahrtgeschwindigkeit v des landwirtschaftlichen Nutzfahrzeugs sowie einer während des Allradbetriebs an der Vorderachse auftretenden Radumfangsgeschwindigkeit $V_v$ berechnet,

$$\mu = \frac{v_v - v}{v_v} .$$

Hierbei ermittelt die Kontrolleinheit die an der Vorderachse auftretende Radumfangsgeschwindigkeit $v_v$ aus dem als bekannt vorausgesetzten Reifenumfang der Vorderräder in Abhängigkeit einer zugehörigen Raddrehzahl $n_v$.

Die momentane Fahrtgeschwindigkeit v lässt sich beispielsweise durch Erfassung zeitlicher Positionsänderungen des landwirtschaftlichen Nutzfahrzeugs ableiten. Letztere werden der Kontrolleinheit seitens eines GPS-Navigationssystems in Form entsprechender Positionsinformationen zur Verfügung gestellt.

Da nicht jedes landwirtschaftliche Nutzfahrzeug über ein GPS-Navigationssystem verfügt, ist eine davon unabhängige Möglichkeit zur Ermittlung der Vorderradschlupfgröße $\mu$ wünschenswert. Ein zuverlässiger Indikator für den an den Vorderrädern auftretenden Antriebsradschlupf stellt das Verhältnis der Antriebsleistungen $P_v$, $P_h$ zwischen der Vorder- und Hinterachse während des Allradbetriebs dar. Dieses Verhältnis liegt im Idealfall in der Größenordnung von 40/60. Niedrigere Werte weisen auf eine verringerte Traktion der Vorderreifen und damit auf eine entsprechende Erhöhung des Antriebsradschlupfs an der Vorderachse hin. Alternativ kann die Kontrolleinheit daher die Vorderradschlupfgröße $\mu$ aus dem Verhältnis rechnerisch ermittelter Antriebsleistungen $P_v$, $P_h$ zwischen der Vorder- und Hinterachse während des Allradbetriebs ableiten. Der mit der Aktivierung des Allradbetriebs korrespondierende Schwellenwert $\mu_{lim}$ wird in diesem Fall in der Größenordnung von 20/80 bis 30/70 vorgegeben.

Zur rechnerischen Ermittlung der Antriebsleistung $P_v$ der Vorderachse besteht die Möglichkeit, dass die Kontrolleinheit das an der Vorderachse anliegende

Antriebsmoment $M_v$ bestimmt. Insbesondere ergibt sich die Antriebsleistung $P_v$ dann durch Multiplikation des Antriebsmoments $M_v$ mit der Raddrehzahl $n_v$,

$$P_v = 2\pi \cdot n_v \cdot M_v .$$

Das an der Vorderachse anliegende Antriebsmoment $M_v$ kann mittels eines zugehörigen Drehmomentsensors erfasst werden. Der Drehmomentsensor ist typischerweise als Anordnung mehrerer Dehnungsmessstreifen zur Erkennung einer an der Vorderachse antriebsmomentbedingt auftretenden Torsion ausgebildet. Alternativ kann die Erfassung des Drehmoments an der Vorderachse auch mittels eines magnetoelastischen Verfahrens erfolgen, bei dem eine torsionsbedingt auftretende Magnetfeldänderung an einem ferromagnetischen Achsenabschnitt der Vorderachse mittels zugehöriger Magnetfeldsensoren erfasst und ausgewertet wird.

Ist zur Zuschaltung der Vorderachse eine druckgesteuerte Allradkupplung vorgesehen, so ist es auch denkbar, dass die Kontrolleinheit durch Modulation des Kupplungsschlusses einen im Rutschpunkt der Allradkupplung eingesteuerten Kupplungsdruck p ermittelt sowie das über die Allradkupplung an die Vorderachse übertragene Antriebsmoment $M_v$ aus einem mit dem ermittelten Kupplungsdruck p korrespondierenden Losbrechmoment ableitet.

Die Allradkupplung ist vorzugsweise in drucklosem Zustand geschlossen und verbindet den Vorderachsgetriebeabgang des Fahrzeuggetriebes mit der Vorderachse bzw. einem die Vorderräder antreibenden Vorderachsdifferential.

Typischerweise erfolgt die Betätigung der Allradkupplung seitens der Kontrolleinheit elektrohydraulisch. Zu diesem Zweck ist die Allradkupplung über ein elektrisch steuerbares Proportionalventil mit unter Druck stehender Hydraulikflüssigkeit aus einer Hydraulikversorgung des landwirtschaftlichen Nutzfahrzeugs beaufschlagbar.

Im Rutschpunkt ist der eingesteuerte Kupplungsdruck p im Wesentlichen proportional zu dem von der Allradkupplung an die Vorderachse übertragenen Antriebsmoment $M_v$. Durch Modulation des einzusteuernden Drucks p und damit des Kupplungsschlusses kann der Rutschpunkt verlässlich anhand eines Abfalls der ausgangsseitigen Drehzahl $n_a$ gegenüber der eingangsseitigen Drehzahl $n_b$ der Allradkupplung erkannt werden. Da die hierfür erforderlichen Drehzahlsensoren in aller Regel bereits vorhanden sind, wird eine kostengünstige Möglichkeit zur Ermittlung der Antriebsleistung $P_v$ der Vorderachse geschaffen.

Genauer gesagt erfolgt die Druckeinsteuerung sukzessive bis zum Erreichen des Rutschpunkts, wobei der im Rutschpunkt eingesteuerte Kupplungsdruck p durch Auswertung eines zugehörigen elektrischen Ventilsteuerstroms I bestimmt wird. Anschließend wird der eingesteuerte Kupplungsdruck p wieder abgebaut und die Allradkupplung in ihren geschlossenen Zustand zurückversetzt.

Die Bestimmung des Rutschpunkts erfolgt bevorzugt in regelmäßigen Zeitabständen während des Allradbetriebs, wobei die Zeitabstände insbesondere derart gewählt werden, dass ein Überhitzen der Allradkupplung ausgeschlossen ist. Die Zeitabstände liegen hierzu typischerweise im Bereich einiger Minuten.

Bei bekannter Antriebsleistung $P_v$ der Vorderachse kann die Antriebsleistung $P_h$ der Hinterachse ohne Weiteres aus der von dem Dieselmotor bereitgestellten sowie im Hinblick auf anfallende Getriebeverluste korrigierten Gesamtantriebsleistung $P_g$ abgeleitet werden,

$$P_h = P_g - P_v \ .$$

Die von dem Dieselmotor bereitgestellte (unkorrigierte) Gesamtantriebsleitung ergibt sich dabei aus dem momentanen Motorbetriebspunkt und kann von der Kontrolleinheit durch Auslesen einer in einem Motorsteuergerät hinterlegten Motorkennlinie bestimmt werden.

Umgekehrt kann die Kontrolleinheit zur fahrerunabhängigen Aktivierung des Allradbetriebs eine Beurteilung eines an der Hinterachse auftretenden Antriebsradschlupfs vornehmen. Hierzu vergleicht die Kontrolleinheit die momentane Fahrtgeschwindigkeit v des landwirtschaftlichen Nutzfahrzeugs mit einer an der Hinterachse auftretenden Radumfangsgeschwindigkeit $v_h$. Letztere ergibt sich aus dem als bekannt vorausgesetzten Reifenumfang der Hinterräder in Abhängigkeit einer zugehörigen Raddrehzahl $n_h$.

Für den bereits erwähnten Fall, dass das landwirtschaftliche Nutzfahrzeug über kein GPS-Navigationssystem verfügt, kann die momentane Fahrtgeschwindigkeit v auch aus den Raddrehzahlen $n_v$ der bei deaktiviertem Allradbetrieb frei laufenden Vorderräder abgeleitet werden. Ist der an der Hinterachse auftretende Antriebsradschlupf oder eine diese charakterisierende Hinterradschlupfgröße $\mu'$ größer als ein entsprechend vorgegebener Schwellenwert $\mu'_{lim}$, so aktiviert die Kontrolleinheit den Allradbetrieb fahrerunabhängig durch Schließen der Allradkupplung.

Zusätzlich oder alternativ kann die Kontrolleinheit den an der Hinterachse auftretenden Antriebsradschlupf nach Maßgabe einer auf die momentane Fahrtgeschwindigkeit v des landwirtschaftlichen Nutzfahrzeugs bezogenen prozentualen Motorauslastung beurteilen. So lässt sich bei Erreichen eines Werts in der Größenordnung von 70% auf einen erhöhten Antriebsleistungsbedarf und damit auf eine entsprechende Zunahme des Antriebsradschlupfs an der Hinterachse schließen. Die auf die momentane Fahrtgeschwindigkeit v des landwirtschaftlichen Nutzfahrzeugs bezogene prozentuale Motorauslastung kann hierbei von der Kontrolleinheit aus dem momentanen Motorbetriebspunkt durch Auslesen der in dem Motorsteuergerät hinterlegten Motorkennlinie ermittelt werden.

Die erfindungsgemäße Einrichtung wird im Folgenden anhand der beigefügten Zeichnungen näher erläutert. Es zeigen:

Fig. 1      ein Ausführungsbeispiel der erfindungsgemäßen Einrichtung zum Betreiben eines allradgetriebenen landwirtschaftlichen Nutzfahrzeugs,

Fig. 2      ein Flussdiagramm, das ein Verfahren zur Deaktivierung eines von der in Fig. 1 dargestellten Einrichtung ausgeführten Allradbetriebs wiedergibt, und

Fig. 3      ein Flussdiagramm, das ein Verfahren zur Aktivierung eines von der in Fig. 1 dargestellten Einrichtung ausführbaren Allradbetriebs wiedergibt.

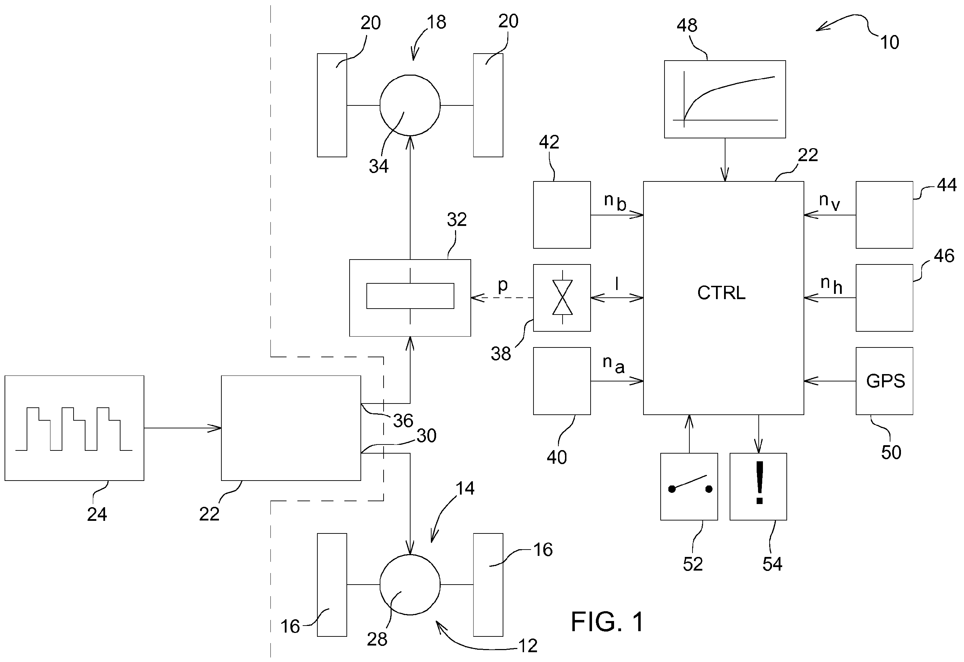

Fig. 1 zeigt ein Ausführungsbeispiel der erfindungsgemäßen Einrichtung zum Betreiben eines allradgetriebenen landwirtschaftlichen Nutzfahrzeugs.

Die Einrichtung 10 ist Bestandteil eines übergeordneten Motor- bzw. Getriebemanagementsystems des landwirtschaftlichen Nutzfahrzeugs, wobei es sich bei dem landwirtschaftlichen Nutzfahrzeug beispielsgemäß um einen allradgetriebenen Traktor 12 handelt. Die Einrichtung 10 umfasst eine angetriebene Hinterachse 14 mit Hinterrädern 16 sowie eine zur Durchführung eines Allradbetriebs zuschaltbare Vorderachse 18 mit lenkbaren Vorderrädern 20. Eine mikroprozessorgesteuerte Kontrolleinheit 22 dient der Koordination des Allradbetriebs, einschließlich einer fahrerunabhängig durchgeführten Aktivierung bzw. Deaktivierung.

Ein als Dieselmotor 24 ausgebildeter Verbrennungsmotor steht über eine Kurbelwelle mit einem Fahrzeuggetriebe 26 in Verbindung. Das Fahrzeuggetriebe 26 umfasst einen über ein Hinterachsdifferential 28 mit der Hinterachse 14 verbundenen Hinterachsgetriebeabgang 30 sowie einen über eine druckgesteuerte Allradkupplung 32 zuschaltbaren und auf diese Weise über ein Vorderachsdifferential 34 mit der Vorderachse 18 verbindbaren Vorderachsgetriebeabgang 36. Die Betätigung der Allradkupplung 32 seitens der Kontrolleinheit 22 erfolgt elektrohydraulisch. Zu diesem Zweck ist die Allradkupplung 32 über ein elektrisch steuerbares Proportionalventil 38 mit unter Druck stehender Hydraulikflüssigkeit aus einer nicht dargestellten Hydraulikversorgung des Traktors 12 beaufschlagbar. Ein mit der Kontrolleinheit 22 verbundener erster bzw. zweiter Drehzahlsensor 40 bzw. 42 dient der Erfassung einer an der Allradkupplung 32 eingangs- bzw. ausgangsseitig anliegenden Drehzahl $n_a$ bzw. $n_b$.

Den Vorder- bzw. Hinterrädern 20 bzw. 16 des Traktors 12 zugeordnete Raddrehzahlsensoren 44 bzw. 46 dienen der Erfassung zugehöriger Raddrehzahlen $n_v$ bzw. $n_h$, wobei die von den Raddrehzahlsensoren 44 bzw. 46 erzeugten Drehzahlsignale neben denjenigen des ersten bzw. zweiten Drehzahlsensors 40 bzw. 42 der Kontrolleinheit 22 zur Auswertung zugeführt werden.

Des Weiteren erhält die Kontrolleinheit 22 Informationen bezüglich des momentanen Motorbetriebspunkts des Dieselmotors 24. Die Bereitstellung erfolgt seitens eines Motorsteuergeräts 48. Ein GPS-Navigationssystem 50 dient ferner der Positionserfassung des Traktors 12.

Ein Betätigungselement 52 in Gestalt eines Schalters erlaubt eine manuelle Aktivierung bzw. Deaktivierung des Allradbetriebs, wobei der Fahrer mittels eines Anzeigeelements 54 über den jeweiligen Aktivierungszustand der Einrichtung 10 informiert wird. Bei dem Betätigungselement 52 handelt es sich beispielsgemäß um einen mechanischen Schalter, im Falle einer grafischen Bedienoberfläche ist jedoch auch eine softwaremäßige Implementierung in Gestalt eines auf einem Touchscreen eingeblendeten Bedienelements denkbar.

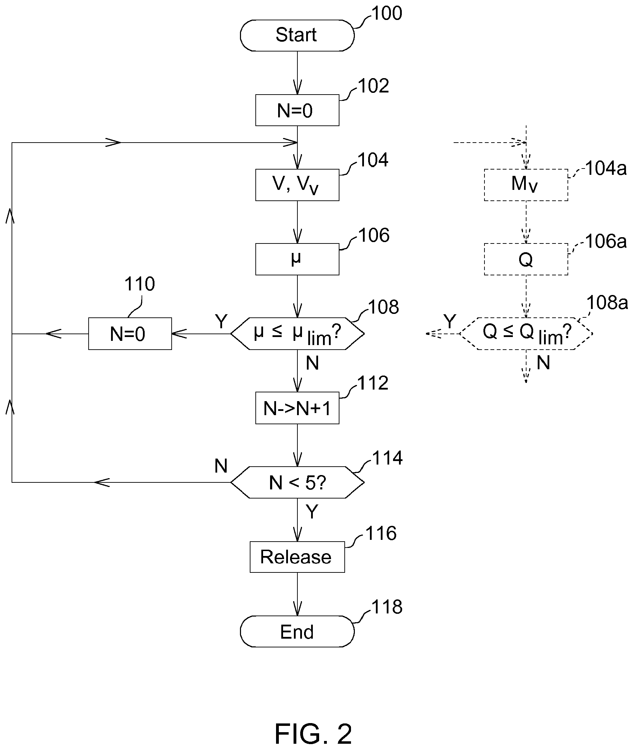

Fig. 2 zeigt ein Flussdiagramm, das ein Verfahren zur Deaktivierung eines von der in Fig. 1 dargestellten Einrichtung ausgeführten Allradbetriebs wiedergibt.

Das von der Kontrolleinheit 22 durchgeführte Verfahren wird bei Erkennung eines aktivierten Allradbetriebs in einem Startschritt 100 initialisiert, wobei die Kontrolleinheit 22 in einem ersten Schritt 102 einen Zähler N auf den Wert Null setzt.

In einem nachfolgenden zweiten Schritt 104 wird die momentane Fahrtgeschwindigkeit v des Traktors 12 gegenüber dem Erdboden ermittelt. Die momentane Fahrtgeschwindigkeit v des Traktors 12 wird von der Kontrolleinheit 22 durch Erfassung zeitlicher Positionsänderungen des Traktors 12 abgeleitet. Letztere werden der Kontrolleinheit 22 seitens des GPS-Navigationssystems 50 in Form entsprechender Positionsinformationen zur Verfügung gestellt.

Des Weiteren ermittelt die Kontrolleinheit 22 im zweiten Schritt 104 aus dem als bekannt vorausgesetzten Reifenumfang der Vorderräder 20 in Abhängigkeit der mittels der Raddrehzahlsensoren 44 erfassten Raddrehzahl $n_v$ eine an der Vorderachse 18 auftretende Radumfangsgeschwindigkeit $v_v$.

Die im zweiten Schritt 104 ermittelten Geschwindigkeiten v und $v_v$ werden in einem dritten Schritt 106 zur Berechnung einer Vorderradschlupfgröße $\mu$ herangezogen, die einen an der Vorderachse 18 des Traktors 12 auftretenden Antriebsradschlupf charakterisiert, indem das Verhältnis zwischen der momentanen Fahrtgeschwindigkeit v des Traktors 12 sowie der während des Allradbetriebs am der Vorderachse 18 auftretenden Radumfangsgeschwindigkeit $v_v$ gebildet wird,

$$\mu = \frac{v_v - v}{v_v} \ .$$

In einem vierten Schritt 108 vergleicht die Kontrolleinheit 22 die berechnete Vorderradschlupfgröße $\mu$ mit einem vorgegebenen Schwellenwert $\mu_{lim}$. Ist die Vorderradschlupfgröße $\mu$ kleiner oder gleich dem vorgegebenen Schwellenwert $\mu_{lim}$, so wird mit einem fünften Schritt 110 fortgefahren, in dem dem Zähler N erneut der Wert Null zugeordnet wird. Anschließend kehrt das Verfahren zum zweiten Schritt 104 zurück.

Erkennt die Kontrolleinheit 22 im vierten Schritt 108, dass die Vorderradschlupfgröße $\mu$ größer ist als der vorgegebene Schwellenwert $\mu_{lim}$, so wird der Zähler N in einem sechsten Schritt 112 um den Wert Eins erhöht. Anschließend wird in einem siebten Schritt 114 geprüft, ob der Zähler N den Wert Fünf erreicht hat. Ist dies der Fall, so deaktiviert die Kontrolleinheit 22 den Allradbetrieb fahrerunabhängig durch Öffnen der Allradkupplung 32, wozu das Proportionalventil 38 in einem achten Schritt 116 in entsprechender Weise elektrisch angesteuert wird. Anschließend wird das Verfahren in einem Schlussschritt 118 beendet.

Wird im siebten Schritt 114 hingegen festgestellt, dass der Zähler N kleiner ist als der Wert Fünf, so kehrt das Verfahren zum zweiten Schritt 104 zurück.

Durch geeignete Vorgabe des Schwellenwerts $\mu_{lim}$ lässt sich vermeiden, dass der Antrieb der Vorderachse 18 in Situationen aufrechterhalten bleibt, in denen beispielsweise aufgrund verringerter Aufstandskräfte im Bereich der Vorderachse 18 ein hinreichender Bodenkontakt der Vorderreifen des Traktors 12 nicht mehr gegeben ist. Ein Aufwühlen des Untergrunds beim Befahren von Feldern oder Grünflächen wie auch ein übermäßiger Verschleiß der Vorderreifen im Falle der Durchführung von Straßentransportfahrten kann auf diese Weise verlässlich vermieden werden.

Dies ist insbesondere bei einer Entlastung der Vorderachse 18 infolge eines hecklastigen Fahrverhaltens des Traktors 12 von Bedeutung. Derartige Verhältnisse treten typischerweise beim Pflügen oder beim Transport von im Heckbereich angebrachten Zusatz- bzw. Anbaugeräten auf.

Somit wird die Antriebsverbindung zur Vorderachse 18 durch Öffnen der Allradkupplung 32 ohne Zutun des Fahrers unterbrochen, sobald während des Allradbetriebs festgestellt wird, dass ein erhöhter Antriebsradschlupf an den Vorderreifen auftritt.

Für den Fall, dass der Traktor 12 über kein GPS-Navigationssystem 50 verfügt, ist nachfolgend eine abweichende Vorgehensweise bei der Ermittlung der Vorderradschlupfgröße $\mu$ vorgesehen.

Demgemäß bestimmt die Kontrolleinheit 22 in einem alternativen zweiten Schritt 104a zunächst das an der Vorderachse 18 des Traktors 12 anliegende Antriebsmoment $M_v$. Hierzu nimmt die Kontrolleinheit 22 eine gezielte Modulation des Kupplungsschlusses der Allradkupplung 32 mit dem Ziel der Bestimmung des jeweiligen Rutschpunkts vor; der Rutschpunkt repräsentiert das Losbrechmoment der Allradkupplung 32 und damit das über die Allradkupplung 32 an die Vorderachse 18 übertragene Antriebsmoment $M_v$.

Im Rutschpunkt ist der eingesteuerte Kupplungsdruck p im Wesentlichen proportional zu dem von der Allradkupplung 32 an die Vorderachse 18 übertragenen Antriebsmoment $M_v$, erlaubt mithin dessen unmittelbare Bestimmung. Die Allradkupplung 32 ist in drucklosem Zustand geschlossen, wobei der eingesteuerte Kupplungsdruck p durch entsprechende Bestromung des Proportionalventils 38 sukzessive solange erhöht wird, bis anhand eines Abfalls der ausgangsseitigen Drehzahl $n_a$ gegenüber der eingangsseitigen Drehzahl $n_b$ der Allradkupplung 32 erkannt wird, dass der Rutschpunkt erreicht ist. Daraufhin bestimmt die Kontrolleinheit 22 den im Rutschpunkt eingesteuerten Kupplungsdruck p und damit das mit dem zugehörigen Losbrechmoment korrespondierende Antriebsmoment $M_v$ durch Auswertung eines zugehörigen elektrischen Ventilsteuerstroms I. Anschließend wird der eingesteuerte Kupplungsdruck p wieder abgebaut und die Allradkupplung 32 in ihren geschlossenen Zustand zurückversetzt.

Ergänzend sei angemerkt, dass die Verwendung separater Drehzahlsensoren 40 und 42 zur Rutschpunktbestimmung nicht zwingend erforderlich ist, da sich ein Abfall der ausgangsseitigen Drehzahl $n_a$ gegenüber der eingangsseitigen Drehzahl $n_b$ der Allradkupplung 32 auch aus einem Vergleich der von den beiden Raddrehzahlsensoren 44 und 46 erfassten Raddrehzahlen $n_v$ und $n_h$ zwischen Vorder- und Hinterachse 18 und 14 ableiten lässt.

Die Bestimmung des Rutschpunkts erfolgt in gleichmäßigen Zeitabständen während des Allradbetriebs, und zwar bei jedem erneuten Durchlaufen des in Fig. 2 dargestellten Verfahrens. Die Zeitabstände werden im Bereich von einigen Minuten derart gewählt, dass ein Überhitzen der Allradkupplung 32 ausgeschlossen ist.

Das im alternativen zweiten Schritt 104a ermittelte Antriebsmoment $M_v$ bildet in einem nachfolgenden alternativen dritten Schritt 106a die Grundlage für die rechnerische Ermittlung der Antriebsleistung $P_v$ der Vorderachse 18. Die Antriebsleistung $P_v$ der Vorderachse 18 ergibt sich dann durch Multiplikation des Antriebsmoments $M_v$ mit der Raddrehzahl $n_v$,

$$P_v = 2\pi \cdot n_v \cdot M_v \ .$$

Die solchermaßen berechnete Antriebsleistung Pv dient zugleich der Ableitung der Antriebsleistung $P_h$ der Hinterachse 14, wozu diese von der von dem Dieselmotor 24 bereitgestellten sowie im Hinblick auf anfallende Getriebeverluste korrigierten Gesamtantriebsleistung $P_g$ subtrahiert wird,

$$P_h = P_g - P_v \ .$$

Die von dem Dieselmotor 24 bereitgestellte (unkorrigierte) Gesamtantriebsleistung $P_g$ ergibt sich dabei aus dem momentanen Motorbetriebspunkt und wird von der Kontrolleinheit 22 durch Auslesen einer in dem Motorsteuergerät 48 hinterlegten Motorkennlinie bestimmt.

Die Kontrolleinheit 22 bestimmt anschließend das Verhältnis der Antriebsleistungen $P_v$, $P_h$ zwischen

der Vorder- und Hinterachse 18 und 14. Das solchermaßen gebildete Verhältnis stellt einen zuverlässigen Indikator für den an den Vorderrädern 20 auftretenden Antriebsradschlupf während des Allradbetriebs dar und liegt im Idealfall in der Größenordnung von 40/60. Niedrigere Werte weisen auf eine verringerte Traktion der Vorderreifen und damit auf eine entsprechende Erhöhung des Antriebsradschlupfs an der Vorderachse 18 hin. Die Kontrolleinheit 22 leitet daher die Vorderradschlupfgröße $\mu$ im alternativen dritten Schritt 106a aus dem Verhältnis Q der rechnerisch ermittelten Antriebsleistungen $P_v$, $P_h$ zwischen der Vorder- und Hinterachse 18 und 14 während des Allradbetriebs ab. Der mit der Aktivierung des Allradbetriebs korrespondierende Schwellenwert $Q_{lim}$ ist in einem alterativen vierten Schritt 108 in der Größenordnung von 20/80 bis 30/70 vorgegeben.

Wird daher im alternativen vierten Schritt 108a erkannt, dass das Verhältnis Q der Antriebsleistungen $P_v$, $P_h$ zwischen der Vorder- und Hinterachse 18 und 14 größer ist als der vorgegebene Schwellenwert $Q_{lim}$, so wird auf einen erhöhten Antriebsradschlupf an der Vorderachse 18 geschlossen, sodass mit dem sechsten Schritt 112 fortgefahren wird. Andernfalls kehrt das Verfahren nach Durchlaufen des fünften Schritts 110 zum zweiten Schritt 104 zurück, um erneut durchlaufen zu werden.

Abweichend von der vorstehend beschriebenen Vorgehensweise kann auch eine unmittelbare Erfassung des Antriebsmoments $M_v$ mittels eines (in Fig. 1 nicht dargestellten) Drehmomentsensors erfolgen. Der Drehmomentsensor ist typischerweise als Anordnung mehrerer Dehnungsmessstreifen zur Erkennung einer an der Vorderachse 18 antriebsmomentbedingt auftretenden Torsion ausgebildet.

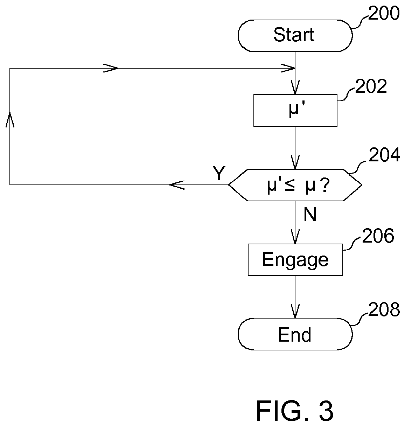

Fig. 3 zeigt ferner ein Flussdiagramm, das ein Verfahren zur Aktivierung des von der in Fig. 1 dargestellten Einrichtung ausführbaren Allradbetriebs wiedergibt.

Das von der Kontrolleinheit 22 durchgeführte Verfahren wird bei Erkennung eines deaktivierten Allradbetriebs in einem Startschritt 200 initialisiert.

In einem ersten Schritt 202 nimmt die Kontrolleinheit 22 eine Beurteilung eines an der Hinterachse 14 auftretenden Antriebsradschlupfs vor. Hierzu vergleicht die Kontrolleinheit 22 die momentane Fahrtgeschwindigkeit v des Traktors 12 mit einer an der Hinterachse 14 auftretenden Radumfangsgeschwindigkeit $v_h$. Letztere ergibt sich aus dem als bekannt vorausgesetzten Reifenumfang der Hinterräder 16 in Abhängigkeit der zugehörigen Raddrehzahl $n_h$. Zur Beurteilung des Antriebsradschlupfs erfolgt die Berechnung einer diesen charakterisierenden Hinterradschlupfgröße $\mu'$,

$$\mu' = \frac{v_h - v}{v_h} \ .$$

Für den bereits erwähnten Fall, dass der Traktor 12 über kein GPS-Navigationssystem 50 verfügt, wird die momentane Fahrtgeschwindigkeit v aus den Raddrehzahlen $n_v$ der bei deaktiviertem Allradbetrieb frei laufenden Vorderräder 20 abgeleitet.

Wird in einem zweiten Schritt 204 festgestellt, dass die Hinterradschlupfgröße $\mu'$ größer ist als ein entsprechend vorgegebener Schwellenwert $\mu'_{lim}$, so aktiviert die Kontrolleinheit 22 den Allradbetrieb in einem dritten Schritt 206 fahrerunabhängig durch Schließen der Allradkupplung 32. Andernfalls kehrt das Verfahren zum ersten Schritt 202 zurück.

Ergänzend wird im zweiten Schritt 204 der an der Hinterachse 14 auftretende Antriebsradschlupf nach Maßgabe einer auf die momentane Fahrtgeschwindigkeit v des Traktors 12 bezogenen prozentualen Motorauslastung beurteilt. So lässt sich bei Erreichen eines Werts in der Größenordnung von 70% auf einen erhöhten Antriebsleistungsbedarf und damit auf eine entsprechende Zunahme des Antriebsradschlupfs an der Hinterachse 14 schließen. Die auf die momentane Fahrtgeschwindigkeit v des Traktors 12 bezogene prozentuale Motorauslastung wird hierbei von der Kontrolleinheit 22 aus dem momentanen Motorbetriebspunkt durch Auslesen der in dem Motorsteuergerät 48 hinterlegten Motorkennlinie ermittelt.

Anschließend wird das Verfahren in einem Schlussschritt beendet.

## Patentansprüche

1. Einrichtung zum Betreiben eines allradgetriebenen landwirtschaftlichen Nutzfahrzeugs, mit einer angetriebenen Hinterachse (14) sowie einer zur Durchführung eines Allradbetriebs zuschaltbaren Vorderachse (18), wobei eine Kontrolleinheit (22) während des Allradbetriebs eine Vorderradschlupfgröße ($\mu$) ermittelt, die einen an der Vorderachse (18) des landwirtschaftlichen Nutzfahrzeugs (12) auftretenden Antriebsradschlupf charakterisiert, **dadurch gekennzeichnet, dass** die Kontrolleinheit (22) den Allradbetrieb durch Öffnen einer die Antriebsverbindung zur Vorderachse (18) unterbrechenden Allradkupplung (32) fahrerunabhängig deaktiviert, wenn diese erkennt, dass die ermittelte Vorderradschlupfgröße ($\mu$) größer ist als ein vorgegebener Schwellenwert ($\mu_{lim}$), der auf einen während des Allradbetriebs an der Vorderachse (18) auftretenden erhöhten Antriebsradschlupf hinweist.

2. Einrichtung nach Anspruch 1, **dadurch gekennzeichnet, dass** die Kontrolleinheit (22) die Vorderradschlupfgröße ($\mu$) aus dem Verhältnis zwischen der momentanen Fahrtgeschwindigkeit (v) des landwirtschaftlichen Nutzfahrzeugs (12) sowie einer während des Allradbetriebs an der Vorderachse (18) auftretenden Radumfangsgeschwindigkeit ($v_v$) berechnet.

3. Einrichtung nach Anspruch 1 oder 2, **dadurch gekennzeichnet, dass** die Kontrolleinheit (22) die Vorderradschlupfgröße ($\mu$) aus dem Verhältnis rechnerisch ermittelter Antriebsleistungen ($P_v$, $P_h$) zwischen der Vorder- und Hinterachse (18, 14) während des Allradbetriebs ableitet.

4. Einrichtung nach Anspruch 3, **dadurch gekennzeichnet, dass** die Kontrolleinheit (22) zur rechnerischen Ermittlung der Antriebsleistung ($P_v$) der Vorderachse (18) das an der Vorderachse (18) anliegende Antriebsmoment ($M_v$) bestimmt.

5. Einrichtung nach Anspruch 4, **dadurch gekennzeichnet, dass** das an der Vorderachse (18) anliegende Antriebsmoment ($M_v$) mittels eines Drehmomentsensors bestimmt wird.

6. Einrichtung nach Anspruch 4 oder 5, **dadurch gekennzeichnet, dass** zur Zuschaltung der Vorderachse (18) eine druckgesteuerte Allradkupplung (32) vorgesehen ist, wobei die Kontrolleinheit (22) durch Modulation des Kupplungsschlusses einen im Rutschpunkt der Allradkupplung (32) eingesteuerten Kupplungsdruck (p) ermittelt sowie das über die Allradkupplung (32) an die Vorderachse (18) übertragene Antriebsmoment ($M_v$) aus einem mit dem ermittelten Kupplungsdruck (p) korrespondierenden Losbrechmoment ableitet.

7. Einrichtung nach Anspruch 6, **dadurch gekennzeichnet, dass** die Bestimmung des Rutschpunkts bevorzugt in regelmäßigen Zeitabständen während des Allradbetriebs erfolgt.

8. Einrichtung nach wenigstens einem der Ansprüche 1 bis 7, **dadurch gekennzeichnet, dass** die Kontrolleinheit (22) zur fahrerunabhängigen Aktivierung des Allradbetriebs eine Beurteilung eines an der Hinterachse (14) auftretenden Antriebsradschlupfs vornimmt.

9. Einrichtung nach Anspruch 8, **dadurch gekennzeichnet, dass** die Kontrolleinheit (22) den an der Hinterachse (14) auftretenden Antriebsradschlupf nach Maßgabe einer auf die momentane Fahrtgeschwindigkeit (v) des landwirtschaftlichen Nutzfahrzeugs (12) bezogenen prozentualen Motorauslastung beurteilt.

10. Allradgetriebenes landwirtschaftliches Nutzfahrzeug, insbesondere Traktor, mit einer Einrichtung (10) nach wenigstens einem der Ansprüche 1 bis 9.

## Claims

1. Device for operating an all-wheel-drive agricultural utility vehicle, having a driven rear axle (14) and a front axle (18) which can be engaged for carrying out all-wheel operation, wherein a control unit (22) ascertains, during all-wheel operation, a front wheel slip variable ($\mu$) which characterizes a drive wheel slip occurring at the front axle (18) of the agricultural utility vehicle (12), **characterized in that** the control unit (22) deactivates all-wheel operation by opening an all-wheel clutch (32), which interrupts the drive connection to the front axle (18), independently of the driver when it identifies that the ascertained front wheel slip variable ($\mu$) is greater than a predefined threshold value ($\mu_{lim}$) which indicates an increased drive wheel slip occurring at the front axle (18) during all-wheel operation.

2. Device according to Claim 1, **characterized in that** the control unit (22) calculates the front wheel slip variable ($\mu$) from the ratio between the momentary travelling speed (v) of the agricultural utility vehicle (12) and a wheel circumferential speed ($v_v$) occurring at the front axle (18) during all-wheel operation.

3. Device according to Claim 1 or 2, **characterized in that** the control unit (22) derives the front-wheel slip variable ($\mu$) from the ratio of drive powers ($P_v$, $P_h$), ascertained by calculation, between the front and the rear axle (18, 14) during all-wheel operation.

4. Device according to Claim 3, **characterized in that** the control unit (22), for ascertaining the drive power ($P_v$) of the front axle (18) by calculation, determines the drive torque ($M_v$) applied to the front axle (18).

5. Device according to Claim 4, **characterized in that** the drive torque ($M_v$) applied to the front axle (18) is determined by means of a torque sensor.

6. Device according to Claim 4 or 5, **characterized in that** a pressure-controlled all-wheel clutch (32) is provided for engaging the front axle (18), wherein the control unit (22) ascertains a clutch pressure (p) set at the slip point of the all-wheel clutch (32) by modulating the clutch closure and derives the drive torque ($M_v$) transmitted to the front axle (18) via the all-wheel clutch (32) from a breakaway torque corresponding to the ascertained clutch pressure (p).

7. Device according to Claim 6, **characterized in that** the slip point is preferably determined at regular time intervals during all-wheel operation.

8. Device according to at least one of Claims 1 to 7, **characterized in that** the control unit (22), for driver-independent activation of all-wheel operation, assesses a drive wheel slip occurring at the rear axle (14).

9. Device according to Claim 8, **characterized in that** the control unit (22) assesses the drive wheel slip occurring at the rear axle (14) in accordance with a percentage engine load based on the momentary travelling speed (v) of the agricultural utility vehicle (12).

10. All-wheel-drive agricultural utility vehicle, in particular tractor, having a device (10) according to at least one of Claims 1 to 9.

**Revendications**

1. Dispositif d'entraînement d'un véhicule utilitaire agricole à traction intégrale, comprenant un essieu arrière entraîné (14) et un essieu avant (18) embrayable pour réaliser une traction intégrale, une unité de commande (22) déterminant pendant le fonctionnement en traction intégrale une grandeur de patinage de roues avant ($\mu$) qui caractérise un patinage des roues d'entraînement se produisant sur l'essieu avant (18) du véhicule utilitaire agricole (12), **caractérisé en ce que** l'unité de commande (22) désactive, indépendamment du conducteur, le fonctionnement en traction intégrale en ouvrant un embrayage de traction intégrale (32) qui interrompt la liaison d'entraînement avec l'essieu avant (18) si elle détecte que la grandeur de patinage de roues avant déterminé ($\mu$) est supérieure à une valeur seuil spécifiée ($\mu_{lim}$), ce qui indique un patinage de roues d'entraînement accru se produisant sur l'essieu avant (18) pendant le fonctionnement en traction intégrale.

2. Dispositif selon la revendication 1, **caractérisé en ce que** l'unité de commande (22) calcule la grandeur de patinage de roues avant ($\mu$) à partir du rapport entre la vitesse de roulement actuelle (v) du véhicule utilitaire agricole (12) et une vitesse de roues périphérique ($V_v$) se produisant sur l'essieu avant (18) pendant le fonctionnement en traction intégrale.

3. Dispositif selon la revendication 1 ou 2, **caractérisé en ce que** l'unité de commande (22) déduit la grandeur de patinage de roues avant ($\mu$) du rapport de puissances d'entraînement ($P_v$, $P_h$), déterminé par calcul, entre les essieux avant et arrière (18, 14) pendant le fonctionnement en traction intégrale.

4. Dispositif selon la revendication 3, **caractérisé en ce que** l'unité de commande (22) détermine le couple d'entraînement ($M_v$) appliqué sur l'essieu avant (18) pour déterminer par le calcul la puissance d'entraînement ($P_v$) de l'essieu avant (18).

5. Dispositif selon la revendication 4, **caractérisé en ce que** le couple d'entraînement ($M_v$) appliqué sur

l'essieu avant (18) est déterminé au moyen d'un capteur de couple.

6. Dispositif selon la revendication 4 ou 5, **caractérisé en ce qu'**un embrayage de traction intégrale (32) commandé par pression est prévu pour embrayer l'essieu avant (18), l'unité de commande (22) déterminant une pression d'embrayage (p) appliquée au point de patinage de l'embrayage de traction intégrale (32) en modulant l'engagement de l'embrayage, et déduisant le couple d'entraînement ($M_v$), transmis par le biais de l'embrayage de traction intégrale (32) à l'essieu avant (18), d'un couple de décollement correspondant à la pression d'embrayage (p) déterminée.

7. Dispositif selon la revendication 6, **caractérisé en ce que** la détermination du point de patinage est de préférence effectuée à intervalles de temps réguliers pendant le fonctionnement en traction intégrale.

8. Dispositif selon l'une au moins des revendications 1 à 7, **caractérisé en ce que** l'unité de commande (22) effectue une évaluation d'un patinage de roues d'entraînement, se produisant sur essieu arrière (14), afin d'activer la traction intégrale indépendamment du conducteur.

9. Dispositif selon la revendication 8, **caractérisé en ce que** l'unité de commande (22) évalue le patinage des roues d'entraînement, se produisant sur l'essieu arrière (14), selon un pourcentage d'utilisation du moteur à pleine charge sur la base de la vitesse de roulement actuelle (v) du véhicule utilitaire agricole (12).

10. Véhicule utilitaire agricole à traction intégrale, notamment tracteur, comprenant un dispositif (10) selon au moins l'une des revendications 1 à 9.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2730447 A1
- US 5802489 A
- US 4718515 A
- DE 19647507 A1